(19) Europäisches Patentamt
European Patent Office
Office européen des brevets

(11) Publication number: **0 445 864 B1**

(12) **EUROPEAN PATENT SPECIFICATION**

(45) Date of publication of patent specification: **24.08.94**

(51) Int. Cl.⁵: **C08G 18/00**, C08G 18/38, C08G 59/40, G02B 6/12, G03F 7/027

(21) Application number: **91200399.3**

(22) Date of filing: **26.02.91**

(54) **Thermally curable NLO system and integrated optical components prepared therefrom.**

(30) Priority: **06.03.90 NL 9000507**

(43) Date of publication of application:
**11.09.91 Bulletin 91/37**

(45) Publication of the grant of the patent:
**24.08.94 Bulletin 94/34**

(84) Designated Contracting States:
**AT BE CH DE DK ES FR GB GR IT LI LU NL SE**

(56) References cited:
**EP-A- 0 262 680**
**EP-A- 0 363 237**
**FR-A- 2 317 316**
**US-A- 4 835 081**

**CHEMICAL ABSTRACTS, vol. 110, no. 2, abstract no. 9419r, Columbus, Ohio, US;& JP-A-63 175 835**

(73) Proprietor: **Akzo Nobel N.V.**
**Velperweg 76**
**NL-6824 BM Arnhem (NL)**

(72) Inventor: **van der Horst, Peter Marten**
**Hagemansweι 92**
**NL-6843 XN Arnhem (NL)**
Inventor: **Horsthuis, Winfried Henri Gerard**
**Noorderstraat 7**
**NL-6953 CD Dieren (NL)**

(74) Representative: **Schalkwijk, Pieter Cornelis et al**
**AKZO NOBEL N.V.**
**Patent Department (Dept. CO)**
**P.O. Box 9300**
**NL-6800 SB Arnhem (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 445 864 B1

## Description

The invention relates to a thermally curable system capable of forming an optical waveguide, comprising a DπA group-containing compound (A) having 2 or more functional groups and a compound (B) having 2 or more functional groups reactive towards A, with at least one of the compounds A or B being a trifunctional or higher functional compound.

A basic requirement for a material to be capable of forming an optical waveguide is sufficient optical transparency. The present invention relates to such materials displaying transparency for a wavelength area within the range that is of importance to telecommunication and optical interconnect applications. Such a wavelength area includes a range from ultraviolet to near-infrared, the visible to near infrared range being of the highest importance.

A thermally curable system of the type mentioned in the opening paragraph is known from the 7-11/8/89 San Diego SPIE meeting and written up in Proceed SPIE Vol. 1147.
These systems comprise tetrafunctional amines as DπA group-containing compounds and diepoxides as compounds reactive towards them.

The term DπA group, well-known to the skilled man, refers to a delocalized π-electron system to which are coupled both an electron donor and an electron acceptor. By aligning these groups in an electric field it is possible to induce a second order non-linear optical effect (NLO effect) into compounds containing DπA groups. Such second order NLO-active, wave-guiding materials may for instance be used in optical switches.

Thermosetting DπA systems may be formed into a thin layer, after which it is possible to have alignment of the DπA groups and curing of the material take place simultaneously. In the above-mentioned publication it is pointed out that this may serve to obviate the drawback of rapid relaxation of the alignment that exists in some long-known NLO materials (e.g., NLO guest-host systems).

However, the drawback to the thermally curable systems described in said publication is that the curing process takes up too much time, e.g. 16 hours, for use in actual practice. A typical disadvantage consists in that when a longer period of time is required, the risk of electrical burn-out during the alignment of the DπA groups is greatly increased.

The invention has for its object to provide a thermally curable DπA groups-containing system that can be cured rapidly, without there being obtained less favourable NLO properties as a result of the short period of time available for aligning the DπA groups.

The invention consists in that in a thermally curable system of the above-mentioned type the functional groups on one of the compounds A or B are isocyanate groups. Such NLO thermosets have a curing time of the order of 15-150 minutes and can be readily employed as waveguide, as is shown by, e.g., the low optical attenuation determined by experiment. The non-linear optical properties of materials that have been cured and aligned in an electric field are of at least the same standard as those of known materials referred to above.

It is known that thermal curing of amines-based prepolymer systems may lead to discoloration, which may give rise to increased optical attenuation. For a waveguide, this is objectionable. In the amine-based embodiments of the thermal curing systems according to the invention the use of isocyanates is found to counteract such discoloration.

As a further advantage, the thermal curing systems according to the invention are found to form sufficiently flexible materials to permit the preparation of thicker layers also. This may be of advantage for particular applications (say, free space modulation).

In the non-prior published EP-A-0 363 237 a thermally curable system consisting of a triisocyanate and a DπA-prepolymer diol having the following DπA group is disclosed:

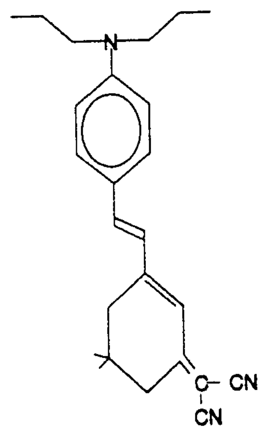

It should be noted that the use of a diol-functionalized D$\pi$A-group containing dye molecule in an isocyanate-containing reaction mixture is known from FR 2 317 316. The disclosure pertains to the dying of polyurethane plastics and describes colouring powders for textile coating and polyurethane foams. Said reaction mixture comprises a low amount of the diol-functionalized dye, further comprising the usual reactants for preparing polyurethanes, i.e. polyether polyols or polyester polyols and a diisocyanate. In the case that a foamed polyurethane is prepared the use of polymeric polyisocyanates is contemplated. The disclosure does not teach a thermally curable system capable of forming an optical waveguide.

For the purpose of preparing optical waveguides it is preferred that the thermally curable system according to the invention does not contain any major other constituent than the compounds A and B referred to above. In this respect the invention pertains to a thermally curable system comprising a D$\pi$A group-containing compound (A) having 2 or more functional groups and a compound (B) having 2 or more functional groups reactive towards A, with at least one of the compounds A or B being a trifunctional or higher functional compound, characterized in that the functional groups on one of the compounds A or B are isocyanate groups, with the proviso that the D$\pi$A group of compound (A) does not satisfy any of the following formulae:

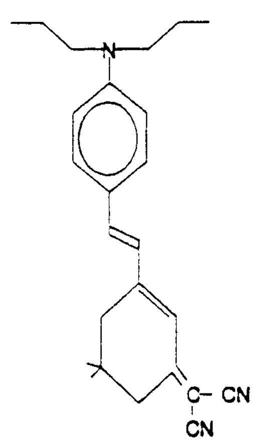

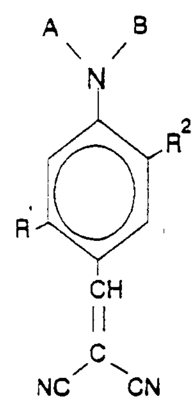

wherein:

- $R^1$ represents -H, a halogen, a (substituted) alkyl group having 1-4 carbon atoms, a (substituted) alkylcarbonyl amino group in which the alkyl group has 1-4 carbon atoms,
- $R^2$ represents -H, a (substituted) alkyl group having 1-4 carbon atoms, a (substituted) alkoxy group having 1-4 carbon atoms,
- A represents a (branched) alkylene chain having 2-6 carbon atoms,
- B represents the same as A and may be chosen independently from A.

The invention equally pertains to a thermally curable system consisting of a D$\pi$A group-containing compound (A) having 2 or more functional groups and a compound (B) having 2 or more functional groups

reactive towards A, with at least one of the compounds A or B being a trifunctional or higher functional compound, characterized in that the functional groups on one of the compounds A or B are isocyanate groups, with the proviso that the DπA group of compound(A) does not satisfy the following formula:

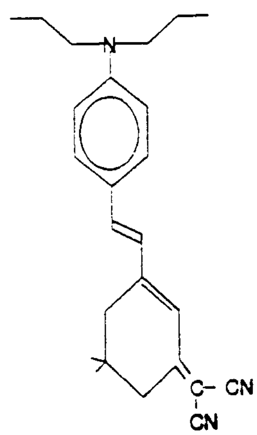

As indicated above, isocyanates may be applied either as the DπA group-containing compound (A) or as the compound (B) reactive towards A. In both cases a requirement is that the isocyanate is an at least bifunctional isocyanate. Difunctional and higher functional isocyanates are well-known in the art. Examples of diisocyanates include aliphatic diisocyanates such as diisocyanato ethane, diisocyanatopropane, tetramethylene diisocyanate, pentamethylene diisocyanate, hexamethylene diisocyanate, nonamethylene diisocyanate, decamethylene diisocyanate, dipropyl ether diisocyanate, alicyclic diisocyanates such as cyclohexane-1,4-diisocyanate, dicyclohexyl methane-4,4'-diisocyanate, hexahydro biphenyl-4,4'-diisocyanate, hexahydro diphenyl ether-4,4'-diisocyanate, aromatic diisocyanates such as phenylene-1,3-diisocyanate, phenylene-1,4-diisocyanate, toluene-2,4-diisocyanate, toluene-2,6-diisocyanate, 1-methoxy benzene-2,4-diisocyanate, 1-chlorophenylene diisocyanate, tetrachloro phenylene diisocyanate, m-xylylene diissocyanate, p-xylylene diisocyanate, diphenyl methane-4,4'-diisocyanate, diphenyl sulfide-4,4'-diisocyanate, diphenyl sulfone-4,4'-diisocyanate, diphenyl ether 4,4'-diisocyanate, diphenyl ether-3,4'-diisocyanate, diphenyl ketone-4,4'-diisocyanate, naphthalene-2,6-diisocyanate, naphthalene-1,4-diisocyanate, biphenyl-4,4'-diisocyanate, biphenyl-2,4'-diisocyanate. Examples of higher functional isocyanates include trimeric hexane diisocyanate (Desmodur-N®), the reaction product of 1 mole of trimethylol propane and 3 moles of a diisocyanate, and polymeric polyisocyanates such as polymeric diphenylmethane diisocyanate.

Isocyanates to be applied as the DπA group-containing compound include common isocyanates to which a DπA group has been linked. The starting isocyanate compound of course should be sufficiently functionalized so as to allow bonding through one or more functional groups, while leaving unaffected at least two isocyanate groups. Such a result can be achieved, e.g., by converting a tri- or higher isocyanate with an equimolar amount of a monofunctional, DπA group-containing compound reactive towards isocyanate, such as an alcohol or an amine.

Preferred isocyanates, in particular for the purpose of preparing thicker layers of the wave-guiding material, are aliphatic and alicyclic isocyanates.

In a further preferred embodiment, the isocyanate is applied as compound B, i.e. the compound to be reacted with a DπA-functionalized molecule. More preferably, the isocyanate is a low-molecular weight di- or poly isocyanate. Besides the advantage that such isocyanates are readily available, the use of a relatively small isocyanate molecule has a favourable effect on the curing reaction with the relatively bulky DπA group-containing molecule.

It is considered the most advantageous if the DπA group containing compound is tri- or higher functional and the isocyanate applied is a diisocyanate. The most preferred, low-molecular weight aliphatic or alicyclic diisocyanates include isophoron diisocyanate, cyclohexane diisocyanate and hexamethylene diisocyanate. The highest preference is given to alicyclic diisocyanates.

DπA group-containing compounds, which may be functionalized either with isocyanate groups or with functional groups reactive towards isocyanate, essentially contain an electron-donating group and an electron-withdrawing group, both attached to the same delocalized π-electron system.

The donor groups in the DπA-systems are known in the art as "+M" groups, i.e. functional groups which are electron-donating by the resonance effect, see J. March "Advanced Organic Chemistry", third edition, John Wiley & sons, New York (1985), pages 237-238. Some examples of "+M" groups are $-O^-$, $-S^-$, amino groups including $-NR_2$, NHR, and $NH_2$, amido groups if attached via nitrogen (-NHCOR), alkoxy groups, hydroxyl groups, ester groups if attached via the alcoholic oxygen (-OCOR), thiol ethers (-SR), mercapto groups (-SH), halogen (Br, I, Cl, F), alkyl and aryl groups. The abbreviation R is used to indicate alkyl groups in general. These include methyl, ethyl, propyl, butyl, pentyl hexyl and larger groups. Included are all isomers. Such groups can be attached via any carbon atom in the alkyl chain.

Acceptor groups can be described analogously as "-M" groups. Some examples are nitrogen, cyano, carboxylic acid, carboxylic ester if attached via carboxylic carbon (-COOR), amido if attached via carboxylic carbon ($-CONH_2$, -CONHR, $CONR_2$), aldehydo (-CHO), keto (-COR), sulfonyl ($-SO_2R$), sulfonate ($-SO_2OR$), nitroso and aryl (which is capable of both kinds of resonance effects).

Either DπA group-containing compound A or compound B reactive towards A contains functional groups that react with isocyanate groups. Such functional groups include hydroxyl, amino, epoxy, carboxyl, carbonate ester, and carboxylic anhydride groups. For the purpose of preparing thermally curable NLO systems according to the present invention, such functional groups can be attached to any aliphatic, alicyclic or aromatic organic molecule. However, as indicated above it is preferred that such an organic molecule which is functionalized with groups reactive towards isocyanate is the DπA group-containing compound A. It is further preferred that this compound A is tri- or higher functional. In this respect it should be noted that an epoxy-group may react with isocyanate groups as a diol equivalent, and thus is capable of acting as a difunctional group.

Preferred for processing into thin layers, especially in multi-layer systems, are groups that do not cause molecules such as $CO_2$ or $H_2O$ to split off. Preference in this respect is given to hydroxyl, amino, epoxy, and carboxylic anhydride groups.

With regard to the description given in the opening paragraph it should be noted that the system may comprise low-molecular weight (monomeric or oligomeric) as well as high-molecular weight (polymeric) compounds. It should further be noted that the compounds (A) and (B) each may consist of a mixture of compounds.

In the already discussed known systems a polymer network is formed starting from a reaction mixture comprising an at least difunctional compound and a trifunctional compound reacting therewith. Processing should take place prior to the occurrence of gelling. A further preferred embodiment of the present invention comprises those systems where first a processable prepolymer is formed and the time at which further curing takes place is determined by the artisan.

It has been found that such systems are those in which compound A contains both hydroxyl groups and amino groups and compound B is a diisocyanate. Favourable results are for instance obtained using a system based on the reaction product of a DπA group-containing epoxide and a diamine.

Preferably, use is made of DπA groups that permit a refractive index pattern to be induced into the polymeric material by irradiation with wavelengths within the absorption bands of these groups. Such groups have been described in non-prepublished European Patent Application 89.309013.4 and satisfy the formula:

$R_1-(\phi i)_k-(R_2=R_3)_m-(\phi j)_l-(R_4=R_5)_n-R_6$

wherein

$R_1$ = -O-, >N-, -S- or

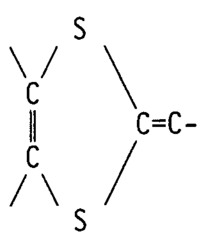

$\phi i$ = a cyclic conjugated unit (e.g. phenyl)

k = 1-4

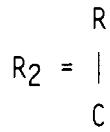

or N and R = H, halogen, cyano, or lower alkyl

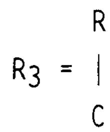

or N
m = 0-6
$\phi j$ = a cyclic conjugated unit (e.g. phenyl)
l = 0-4

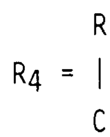

or N

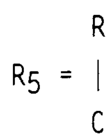

or N
n = 0-6
$R_6$ = -CN, $NO_2$,

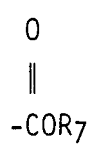 or 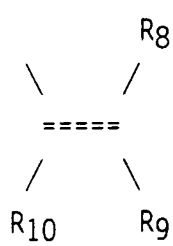

$R_7$ = alkyl
$R_8$ = H or -CN
$R_9$ = H or -CN
$R_{10}$ = H or -CN
Significant examples of such groups include 4-nitro- or 4-cyano-substituted 4'-oxystilbene or 4'-aminostilbene.

Materials containing such groups can be provided with a pattern of channels by waveguide irradiation within the about 230 to 650 nm range. The material will then be suitable for use in the manufacture of passive waveguide devices. By aligning DπA groups in an electric field there is induced into the material a second-order non-linear optical activity. In that case there is question of an active waveguide: the use of a (second) electric field makes it possible to affect the direction, colour, or intensity of the transmitted light.

The invention also relates to integrated optical components comprising a substrate covered on at least one side with a polymer film prepared from a DπA groups-containing thermally curable system as described hereinbefore. Such a planar waveguide may be either active (say, an optical switch) or passive (say, an optical distributor).

A passive planar light-conducting component is formed when a refractive index pattern in the form of channels is induced by irradiation into a thermoset of the above described irradiation-sensitive type. One possible application of such a component is to be formed into power splitters or power collectors for use in communications networks.

Generally, an active planar waveguide consists of a thin core layer of an aligned DπA groups-containing material cladded with thin buffer layers of a material having a lower refractive index than the core material. A known problem when depositing different polymeric layers on top of one another is the softening of earlier deposited layers. The invention provides cured, insoluble NLO-active materials that can be deposited directly on top of one another without any problem. The buffer layers also may contain aligned DπA groups, so that a waveguide built up exclusively from NLO-active materials is formed. By making use of active buffer layers the effectiveness of the NLO effect is increased, as there will then be complete interaction between light and NLO-active material. In this connection it is of importance that the thermally curable systems according to the invention allow for a deposited layer to be so cured by heating that a second layer can be deposited on top of it, with alignment in an electric field continuing to be feasible. Such a heating step may be called "pre-curing."

Planar waveguides are built up from thin layers that vary in thickness from about 400 nm to 20 $\mu$m ($\frac{1}{2}$-20 wavelengths). Not only can the thermally curable systems according to the invention be readily formed into such thin layers, they have the additional advantage that also a thicker structure (of several thousands of wavelengths) still can be readily made and aligned in an electric field. Such NLO-active objects are suitable for use in free space modulation, where the direction or colour of a light beam in the object may be changed. Use may be made of such an object in, e.g., an interconnect between various transmitters and receivers. When such an object is made of an irradiation sensitive thermally curable system, a refractive index pattern can be induced into it also.

The invention will be further illustrated with reference to the following unlimitative examples. The chemical compounds used in them, referred to as EPMANS, EPONS, and HONS-diol, have the following structural formulae:

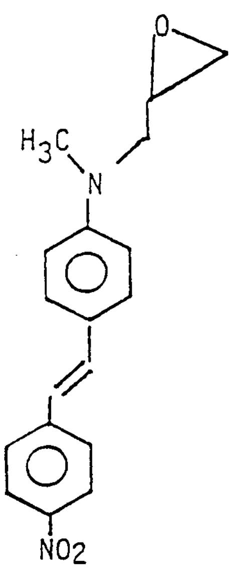

EPMANS

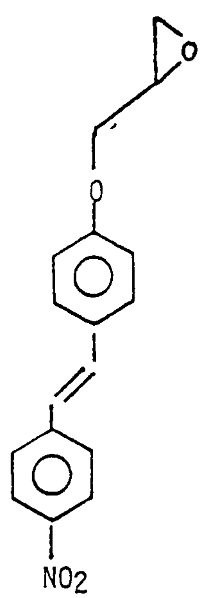

EPONS

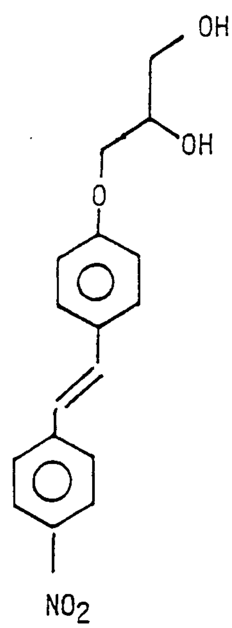

HONS-diol

EXAMPLE I:
(preparation of thermally curable systems)

System 1

DπA group-containing compound A was prepared by dissolving 6,20 g of EPMANS and 1,16 g of 1,6-diaminohexane in 5 g of dimethyl formamide (DMF), heating the solution at 140 °C for 2 hours, and then evaporating the solvent.

For compound B reactive towards A isophorone diisocyanate (IPDI) was used. To obtain a processable prepolymer 4,00 g of IPDI were added at 10 °C to 7,36 g of compound A dissolved in 25 g of cyclopentanone. Next, the solution was stirred at room temperature for 30 minutes.

System 2

DπA group-containing compound A was prepared by dissolving 5,94 g of EPONS and 1,16 g of 1,6-diaminohexane in 5 g of DMF, heating the solution at 140 °C for 2 hours, and then evaporating the solvent.

For compound B reactive towards A IPDI was used. To obtain a processable prepolymer 4,00 g of IPDI were added at 0 °C to 7,10 g of compound A dissolved in 30 g of cyclopentanone. The solution was then stirred at room temperature for 30 minutes, until it was clear.

System 3

DπA group-containing compound A was prepared by dissolving 6,30 g of HONS-diol and 6,72 g of hexane-1,6-diisocyanate in 15 g of cyclopentanone and heating the solution at 80 °C for 3 hours in the presence of 0,001 g of 1,4-diazobicyclo[2,2,2]octane (DABCO).

For compound B reactive towards A was used a tri-epoxide of the following structural formula:

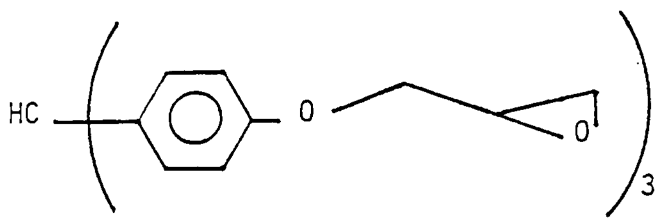

To obtain a processable prepolymer 3,10 g of tri-epoxide B dissolved in 10 g of pentanone were added at room temperature to 13,02 g of compound A dissolved in 15 g of cyclopentanone.

System 4

DπA group-containing compound A was prepared by dissolving 5,94 g of EPONS and 1,16 g of diaminohexane in 5 g of dimethyl formamide, heating the solution at 140 °C for 2 hours, and then evaporating the solvent.

For compound B reactive towards A hexane-1,6-diisocyanate (HDI) was used. To obtain a processable prepolymer 3,02 g of HDI dissolved in 5 g of cyclopentanone were added at room temperature to 13,02 g of compound A dissolved in 15 g of cyclopentanone.

EXAMPLE II:
(processing of thermally curable systems)

The above-described thermally curable systems are formed into thin layers by spin-coating. The procedure used in this case is as follows: after microfiltration a prepolymer is deposited on a suitable substrate (say, glass, silicon, synthetic material, metal, or ceramic material). With high-speed rotation a thin homogeneous layer (typical layer thickness 2 μm) is formed.

The formed film is then heated to a temperature of about 85 °C. This precuring process serves - in addition to effecting the partial curing already described - to remove the solvent.

To enable alignment of the DπA groups in the material as the system is cured, an electrode in the form of a thin metal film (say, 50 nm of silver) is evaporated prior to any further heating taking place. In the present case the conductive silicon was used as substrate, so that it was possible to deposit the second electrode on the bottom side. If an insulating substrate is employed, an electrode should be provided thereon prior to the deposition of the thermal curing system.

The substrate is placed on a table with temperature control and the two electrodes are connected to a direct voltage feed. Common voltages are those of some tens to several hundreds of volts per µm of polymer layer thickness. During the use of the electric field the temperature of the sample is increased gradually to, and kept for 15-45 minutes at, about 145°C. The direct voltage is switched off after cooling to room temperature.

After the DπA groups-containing materials according to the invention had been processed in the above described fashion, measurements were carried out on them using the known prism-coupler method as described in, e.g., Applied Physics Letters 55, 616-618, 1989.

Passive waveguides in multi layer structures made from the thermal curing systems 2 and 3 of Example I displayed an optical attenuation of the order of 1 dB/cm at 1320 nm.

Active waveguides were made by aligning a thermal curing system according to the invention at 7 X $10^7$ V/m. Despite this relatively low field strength already an electro-optic r33 coefficient in the range of 12 pm/volt was found.

The degree of alignment relaxation was determined by measuring the birefringence (an effect induced by the alignment of DπA groups that is easy to measure with the prism coupler method). To this end samples were employed which had been subjected to only a brief thermal treatment.

On being exposed to a temperature of 85°C a first sample (curing time 1 minute at 135°C) displayed an initial relaxation of the birefringence induced by the alignment of the DπA groups of 30%, followed by stable behaviour during the next 60 hours. Already in the case of a sample that had been exposed to an electric field for 4 minutes at 145°C and then kept at a temperature of 85°C for several hours the birefringence was found not to have decreased.

Thus it is demonstrated that the thermally curable systems according to the present invention permit rapid curing, with simultaneous inducement of favourable NLO properties.

The following Table gives measuring results for the thermally curable systems described in Example I:

TABLE

| System | λ633nm | | λ 1320 nm | |
|---|---|---|---|---|
| | index of refraction | optical attenuation | index of refraction | optical attenuation |
| 1 | - | ∞ | 1,622 | < 1 |
| 2 | 1,635 | 10 | 1,614 | < 2 |
| 3 | 1,621 | < 1 | - | < 1 |

This Table shows that the thermally curable systems according to the invention can be formed into waveguides displaying a low optical attenuation at wavelengths that are of interest for practical use. It should be noted that, inherently, polymer 1 from Example I has an absorption maximum extending to 633 nm but is readily usable at 1320 nm. There is no discoloration of amine-containing systems.

The Examples demonstrate that the thermally curable systems according to the present invention are capable of forming an optical waveguide, and display sufficient transparency for wavelengths within the range that is of importance to telecommunication and optical interconnect applications.

## Claims

**1.** A thermally curable system comprising a DπA group-containing compound (A) having 2 or more functional groups and a compound (B) having 2 or more functional groups reactive towards A, with at

least one of the compounds A or B being a trifunctional or higher functional compound, characterized in that the functional groups on one of the compounds A or B are isocyanate groups, with the proviso that the DπA group of compound (A) does not satisfy any of the following formulae:

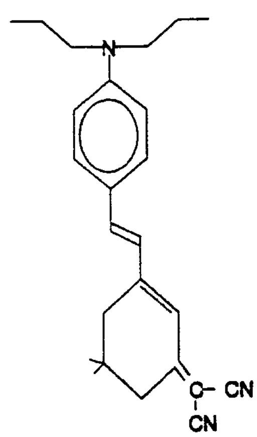

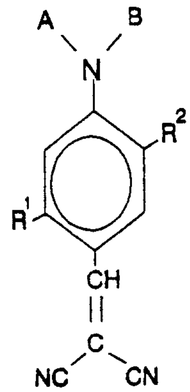

wherein

- $R^1$ represents -H, a halogen, a (substituted) alkyl group having 1-4 carbon atoms, a (substituted) alkylcarbonyl amino group in which the alkyl group has 1-4 carbon atoms,
- $R^2$ represents -H, a (substituted) alkyl group having 1-4 carbon atoms, a (substituted) alkoxy group having 1-4 carbon atoms,
- A represents a (branched) alkylene chain having 2-6 carbon atoms,
- B represents the same as A and may be chosen independently from A.

**2.** A thermally curable system consisting of a DπA group-containing compound (A) having 2 or more functional groups and a compound (B) having 2 or more functional groups reactive towards A, with at least one of the compounds A or B being a trifunctional or higher functional compound, characterized in that the functional groups on one of the compounds A or B are isocyanate groups, with the proviso that the DπA group of compound(A) does not satisfy the following formula:

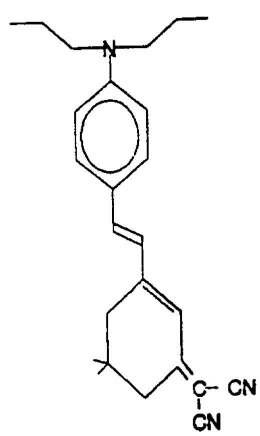

**3.** A thermally curable system according to claim 1 or 2, characterized in that the isocyanate groups-containing compound is an aliphatic or alicyclic isocyanate.

**4.** A thermally curable system according to any one of claims 1-3, characterized in that compound A contains both hydroxyl groups and amino groups and compound B is a diisocyanate.

5. A thermally curable system according to claim 4, characterized in that compound A is the reaction product of a DπA group-containing epoxide and a diamine.

6. An integrated optical component comprising a substrate covered on at least one side with a light-conducting, multi layer structure of which at least one layer is made up of a DπA groups-containing polymer, characterized in that the DπA groups-containing polymer used is a cured network prepared from a thermally curable system according to any one of the preceding claims.

7. An integrated optical component according to claim 6, characterized in that a second order non-linear optical effect has been induced into the polymeric network by aligning the DπA groups in an electric field.

8. An object consisting of a polymeric material obtained by curing a thermally curable system according to any one of the claims 1-5.

9. An object according to claim 8, characterized in that a second order non-linear optical effect has been induced into the polymeric material by aligning the DπA group in an electric field.

**Patentansprüche**

1. Thermisch vernetzbares System, das eine DπA-Gruppen enthaltende Verbindung (A) enthält, die zwei oder mehr funktionelle Gruppen besitzt, und eine Verbindung (B), die zwei oder mehr funktionelle und mit (A) reaktionsfähige Gruppen aufweist, wobei mindestens eine der Verbindungen (A) oder (B) eine trifunktionelle oder höher-funktionelle Verbindung ist, dadurch gekennzeichnet, dass die funktionellen Gruppen in einer der Verbindungen (A) oder (B) Isocyanatgruppen sind, mit der Massgabe, dass die DπA-Gruppe von Verbindung (A) keiner der folgenden Formeln entspricht:

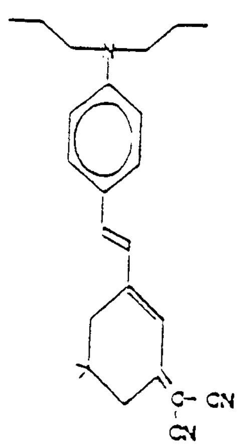

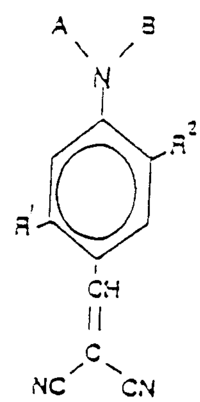

worin:

$R^1$: Wasserstoff, ein Halogen, eine (substituierte) Alkylgruppe mit 1 - 4 Kohlenstoffatomen, eine (substituierte) Alkylcarbonylaminogruppe, in welcher die Alkylgruppe 1 - 4 Kohlenstoffatome besitzt,

$R^2$: Wasserstoff, eine (substituierte) Alkylgruppe mit 1 - 4 Kohlenstofffatomen, eine (substituierte) Alkoxygruppe mit 1 - 4 Kohlenstoffatomen,

A eine (verzweigte) Alkylenkette mit 2 - 6 Kohlenstoffatomen,

B gleich wie A ist und unabhängig von A gewählt werden kann,

bedeuten.

2. Thermisch vernetzbares System, das aus einer DπA-Gruppen enthaltenden Verbindung (A) mit zwei oder mehr funktionellen Gruppen und aus einer Verbindung (B) mit zwei oder mehr funktionellen Gruppen, die mit A reaktionsfähig sind, besteht, wobei mindestens eine der Verbindungen (A) oder (B) eine trifunktionelle oder höherfunktionelle Verbindung ist, dadurch gekennzeichnet, dass die funktionellen Gruppen einer der Verbindungen (A) oder (B) Isocyanatgruppen mit der Massgabe sind, dass die DπA-Gruppe von Verbindung (A) nicht der folgenden Formel entspricht:

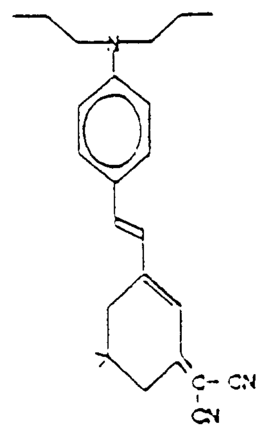

**3.** Thermisch vernetzbares System gemäss Anspruch 1 oder 2, dadurch gekennzeichnet, dass die Isocyanatgruppen enthaltende Verbindung ein aliphatisches oder alicyclisches Isocyanat ist.

**4.** Thermisch vernetzbares System gemäss einem der Ansprüche 1 bis 3, dadurch gekennzeichnet, dass die Verbindung (A) sowohl Hydroxylgruppen als auch Aminogruppen aufweist und die Verbindung (B) ein Diisocyanat ist.

**5.** Thermisch vernetzbares System gemäss Anspruch 4, dadurch gekennzeichnet, dass die Verbindung (A) das Reaktionsprodukt aus einem DπA-Gruppen enthaltenden Epoxid und einem Diamin ist.

**6.** Integrierte optische Komponente mit einem Substrat, das mindestens auf einer Seite mit einer mehrschichtigen lichtleitenden Struktur versehen ist, wobei mindestens eine der Schichten aus einem DπA-Gruppen enthaltenden Polymer hergestellt ist, dadurch gekennzeichnet, dass das DπA-Gruppen enthaltende Polymer ein vernetztes Netzwerk ist, das aus einem thermisch vernetzbaren System gemäss einem der vorangehenden Ansprüche hergestellt ist.

**7.** Integrierte optische Komponente gemäss Anspruch 6, dadurch gekennzeichnet, dass in das polymere Netzwerk durch Ausrichten der DπA-Gruppen in einem elektrischen Feld ein nicht-linearer optischer Effekt zweiter Ordnung induziert worden ist.

**8.** Gegenstand bestehend aus einem polymeren Material, das durch Vernetzen eines thermisch vernetzbaren Systems gemäss einem der Ansprüche 1 bis 5 erhalten ist.

**9.** Genstand nach Anspruch 8, dadurch gekennzeichnet, dass in das polymere Material durch Ausrichten der DπA-Gruppen in einem elektrischen Feld ein nicht-linearer optischer Effekt zweiter Ordnung induziert worden ist.

**Revendications**

**1.** Un système thermodurcissable comprenant un composé (A) contenant un groupe DπA présentant au moins deux groupes fonctionnels et un composé (B) comportant au moins deux groupes fonctionnels réactifs à l'égard de A, l'un au moins des composés A ou B étant un composé comportant au moins trois ou davantage, caractérisé en ce que dans les groupes fonctionnels de l'un des composés A ou B, sont des groupes isocyanate, étant entendu que le groupe DπA du composé (A) ne correspond à aucune des formules suivantes:

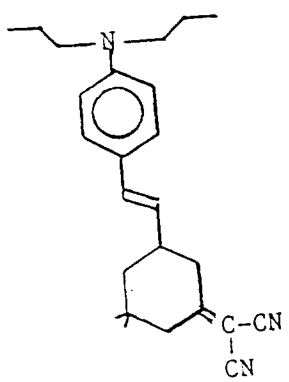

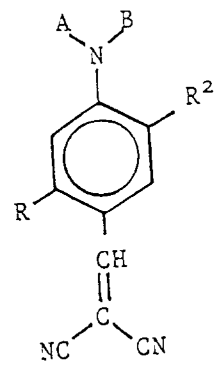

dans lesquelles:

- $R^1$ est un atome d'hydrogène, d'halogène, un groupe alkyle (substitué) comportant 1 à 4 atomes de carbone, un groupe alkyl carbonylamino (substitué), dans lequel le groupe alkyle comporte 1 à 4 atomes de carbone;
- $R^2$ représente un atome d'hydrogène, un groupe alkyle (substitué) comprenant 1 à 4 atomes de carbone, ou un groupe alcoxy (substitué) comportant 1 à 4 atomes de carbone;
- A est une chaîne alkylène (ramifiée) comportant 2 à 6 atomes de carbone;
- B est identique à A et peut être choisi indépendamment de A.

**2.** Un système thermodurcissable formé d'un composé (A) contenant un groupe DπA et comportant au moins deux groupes fonctionnels, et un composé (B) comprenant au moins deux groupes fonctionnels réagissant avec A, l'un au moins des composés A ou B étant un composé au moins trifonctionnel, caractérisé en ce que les groupes fonctionnels de l'un des composés A ou B sont des groupes isocyanate, étant entendu que le groupe DπA du composé (A) ne correspond pas à la formule suivante:

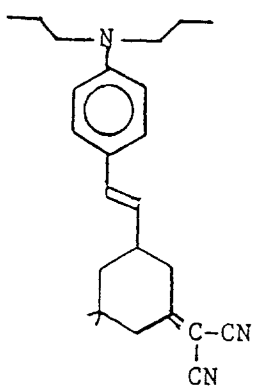

**3.** Un système thermodurcissable selon la revendication 1 ou 2, caractérisé en ce que le composé contenant les groupes isocyanates est un isocyanate aliphatique ou alicyclique.

**4.** Un système thermodurcissable selon l'une quelconque des revendications 1 à 3, caractérisé en ce que le composé A contient à la fois les groupes hydroxyles et les groupes amino et le composé B est un diisocyanate.

**5.** Un système thermodurcissable selon la revendication 4, caractérisé en ce que le composé A est le produit de la réaction d'un époxyde contenant un groupe DπA et d'une diamine.

**6.** Un composant optique intégré comprenant un substrat revêtu au moins sur une de ses faces d'une structure multicouche conductrice de la lumière dont au moins une couche est formée d'un polymère contenant des groupes DπA, caractérisé en ce que le polymère contenant les groupes DπA utilisé est

un réseau durci préparé à partir d'un système thermodurcissable selon l'une quelconque des revendications précédentes.

7. Un composant optique intégré selon la revendication 6, caractérisé en ce que un effet optique non linéaire de second ordre est induit dans le réseau polymère par alignement des groupes D$\pi$A dans un champ électrique.

8. Un objet consistant en un matériau polymère obtenu par durcissement d'un système thermodurcissable selon l'une quelconque des revendications 1 à 5.

9. Un objet selon la revendication 8, caractérisé en ce qu'un effet optique non linéaire de second ordre est induit dans le matériau polymère par alignement des groupes D$\pi$A dans un champ électrique.